# EUROPEAN PATENT SPECIFICATION

(11) **EP 3 904 244 B1**
(45) Date of publication and mention of the grant of the patent: **12.06.2024**
(21) Application number: 21171358.1
(22) Date of filing: 29.04.2021
(51) Int. Cl.: B65G 47/19, B65G 65/34, B65G 69/18, B65G 1/04, G01F 11/00, G01F 13/00

(54) **METHOD AND WAREHOUSE FOR THE DOSED DISPENSING OF POWDERY SUBSTANCE**
VERFAHREN UND LAGER ZUR DOSIERTEN ABGABE VON PULVERFÖRMIGEN SUBSTANZEN
PROCÉDÉ ET ENTREPÔT DE DISTRIBUTION DOSÉE DE SUBSTANCE EN POUDRE

(30) Priority: 29.04.2020 NL 2025461
(43) Date of publication of application: 03.11.2021
(73) Proprietor: Smulders, Eric, 5531GB Bladel (NL)
(72) Inventor: Smulders, Eric, 5531GB Bladel (NL)
(74) Representative: Verhees, Godefridus Josephus Maria

(56) References cited:
- EP-A1- 3 575 754
- JP-A- H1 077 121

## Description

### Technical field of the invention

The invention relates to a method for dosed dispensing of powdered substance from a magazine in which containers containing different powdered substances are located, comprising:
- removing the container with the desired powdery substance from the magazine by transport means,
- taking the desired amount of this powdery substance from this container by a delivery system,
- placing a funnel upside down on an opening provided on the top of the container by lifting means and coupling means,
- turning the container and the funnel thereon upside down by reversing means so that the contents of the container end up in the funnel,
- opening the funnel mouth for dosed dispensing of the powdery substance until the desired amount has fallen from the funnel and then closing the funnel mouth by means of a metering valve,
- turning back the container and the funnel underneath by the reversing means so that the remaining powdery substance falls back into the container,
- removing the funnel from the container by the lifting means and the coupling means, and
- putting the container back in the magazine by transport means.

### Background of the invention

A method according to the preamble of claim 1 is known from EP3575754A1. In this method the containers can be simple bins. By tipping the contents of a bin into a funnel, then letting the desired amount flow out of the funnel and then tipping the content of the funnel back into the bin, it is possible with relatively simple means to achieve a magazine provided with a powder dispensing system.

### Summary of the invention

An object of the invention is to provide a method of the type described in the preamble, in which dust clouds released from the container can be extracted in an efficient way. To this end, the method according to the invention is characterized in that at removing the funnel from the container by the lifting and coupling means, dust clouds released from the container are extracted by suction means arranged on the funnel mouth. By connecting the extraction means directly to the funnel, efficient extraction is obtained. This also applies to a further embodiment of the method according to the invention, which is characterized in that the funnel is blown clean by nozzles and the powdery substance blown away is extracted by the suction means arranged on the funnel mouth.

The invention also relates to a magazine for powdery substances, comprising a number of containers containing different powdery substances, as well as removal means for taking a desired amount of a desired powdery substance from the magazine. A magazine according to the preamble of claim 3 is known from EP3575754A1.

The magazine according to the invention is characterized in that the removal means:
- comprise transport means for removing the container with the desired powdery substance from the magazine and placing the container back in the magazine after taking the desired amount of powdery substance from the container, and
- a delivery system for taking the desired amount of the desired powdery substance from the container,
which delivery system:
- comprises coupling means for coupling an upside-down funnel to an opening provided on the top of the container and, after dispensing the desired amount of powdery substance, disconnecting the container and the funnel, as well as
- reversing means for turning the container and the funnel thereon upside down so that the contents of the container end up in the funnel, and for dispensing the desired amount of powdery substance from the funnel, turn back the container and the funnel underneath, so that the remaining powdery substance falls back into the container, and
- a metering valve for opening and closing the funnel mouth.

The magazine according to the invention is relatively simple and the dispensing system is nevertheless very efficient despite its simplicity.

The delivery system must be cleaned after dispensing a powdery substance to prevent contamination from occurring when another powdery substance is dispensed. The magazine according to the invention, in which the dispensing system can be cleaned in an efficient and effective manner, is characterized in that the magazine further comprises a suction device for extracting clouds of the powdery substance escaping when the container is removed from the funnel and for suctioning powdery substance remaining in the funnel after removal of the funnel from the container, which suction device is connected to the metering valve.

In a further embodiment of the magazine according to the invention, the suction device comprises a suction chamber which is provided with an inlet opening that is connected to the funnel mouth and an outlet opening, and the suction device further comprises a shut-off valve that can close off the outlet opening, as well as suction means connected to the suction chamber. Preferably, the suction chamber is formed by a sleeve open at both ends, the ends forming the inlet opening and the outlet opening.

In another embodiment of the magazine according to the invention, the extraction device comprises an extraction hood that can be mounted on the funnel mouth, as well as extraction means that are connected to the extraction hood.

Yet another embodiment of the magazine according to the invention is characterized in that the funnel is provided with blowing nozzles for blowing the funnel clean.

### Brief description of the drawings

The invention will be explained in more detail below with reference to exemplary embodiments of the magazine according to the invention schematically shown in the drawings. Hereby shows:
Figure 1 the magazine with means of transport and the delivery system;
Figure 2 the delivery system with a container underneath;
Figure 3 the container with the funnel in the coupled position;
Figure 4 the situation during the reversal of the funnel and the container coupled thereto;
Figure 5 the situation after the powdery substance has fallen into the funnel;
Figure 6 the situation during the dispensing of the powdery substance in a receptacle;
Figure 7 the situation after the dosing valve has been closed;
Figure 8 the situation after the shut-off valve has been closed;
Figure 9 the funnel and container during rewind;
Figure 10 the funnel and container after they have been turned back;
Figure 11 the suction of the remainder of the dust cloud during uncoupling of the container;
Figure 12 blowing clean the funnel;
Figure 13 the container ready to be placed back into the magazine by the transport means;
Figure 14 an embodiment of the delivery system with a separate suction device;
Figure 15 blowing clean the container and funnel through nozzles;
Figure 16 disconnecting the container from the funnel; and
Figure 17 the delivery system ready for next use with the extractor hood disconnected.

### Detailed description of the drawings

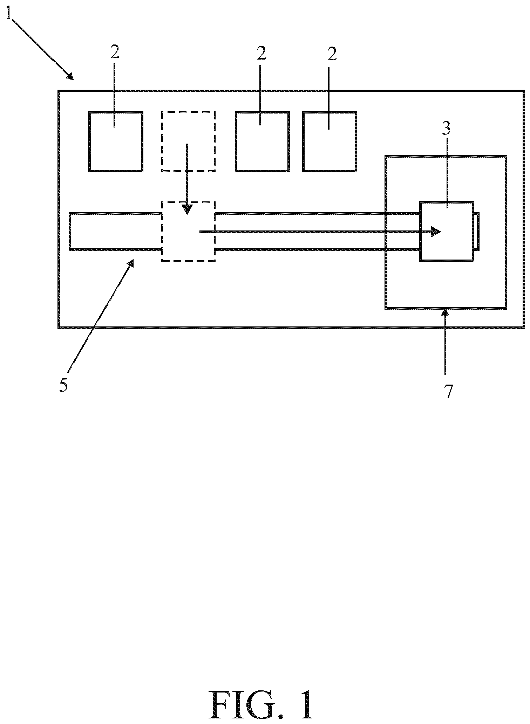

Figure 1 schematically shows a magazine 1 in which containers 2 designed as trays that are open at the top are located. The containers contain various powdered substances. The magazine further has removal means for taking a desired amount of a desired powdery substance from the magazine. These removal means have transport means 5 for removing the container 3 with the desired powdery substance from the magazine and for placing the container back in the magazine after taking the desired amount of powdery substance from the container. The removal means furthermore have a delivery system 7 for taking the desired amount of the desired powdery substance from the container 3 .

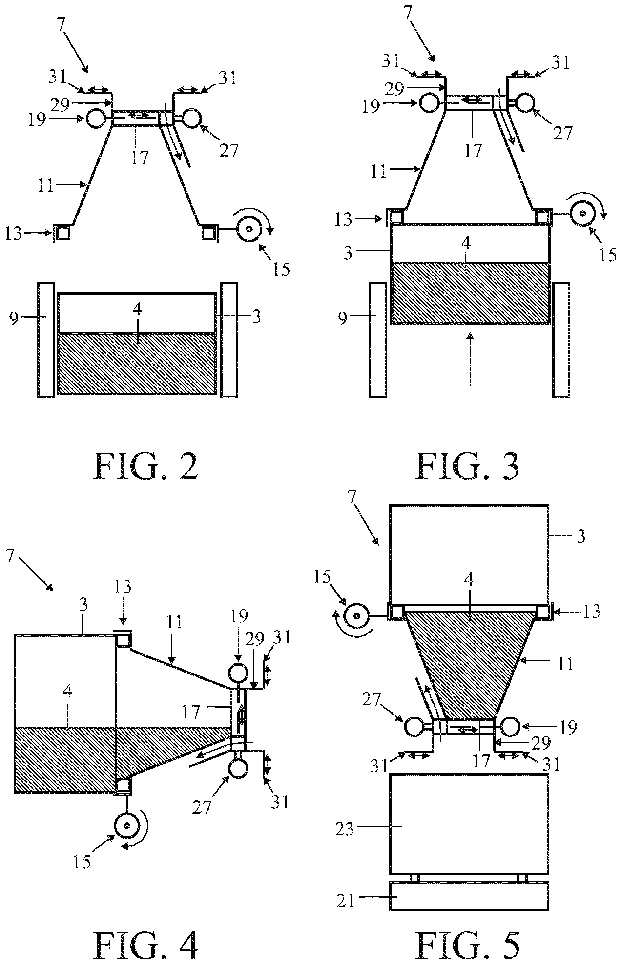

In figure 2 the delivery system 7 is schematically shown. The delivery system has lifting means 9 for lifting the container 3 towards an upside-down funnel 11, as well as coupling means 13 for dust-tight coupling of the funnel to the edge of the open top of the container. Figure 3 shows container 3 with funnel 11 in coupled position.

The delivery system 7 further has reversing means 15 for turning the container 3 and the funnel 11 present thereon upside down so that the powdery substance 4 falls from the container into the funnel. Figure 4 shows the situation during the reversal of the funnel 11 with the container 3 coupled thereto, and figure 5 shows the situation in which the powdery substance 4 has fallen into the funnel 11. The funnel is provided with a funnel mouth 17 which is closed by a metering valve 19. The delivery system 7 furthermore has weighing means 21, as well as a receptacle 23 which is present on the weighing means.

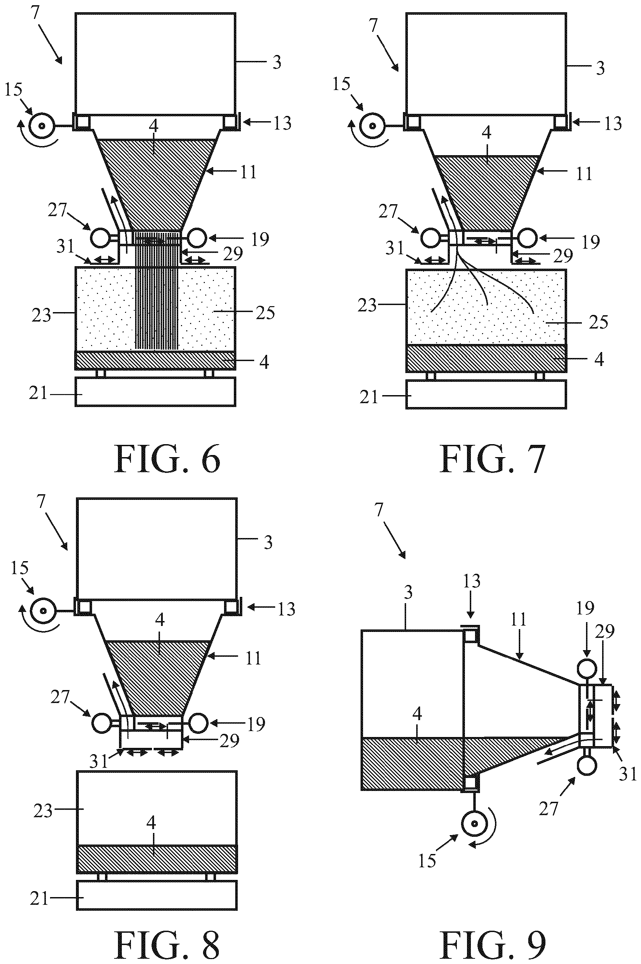

For dispensing the desired amount of powdery substance, the metering valve 19 is opened, see figure 6, and the weight increase of the collecting bin and contents is continuously measured. As soon as the desired weight increase has been reached, the metering valve 19 is closed, see figure 7, and the cloud of dust 25 formed in the collecting bin 21 is extracted by a suction device connected to the metering valve. This suction device has a suction chamber 29 which is formed by a tube open at both ends, one end of which is connected to the metering valve 19 and forms an inlet opening and the other end of which forms an outlet opening which can be closed by a shut-off valve 31. On the extraction chamber 29, extraction means 27 (for instance a fan) are connected, which extracts the dust cloud 25.

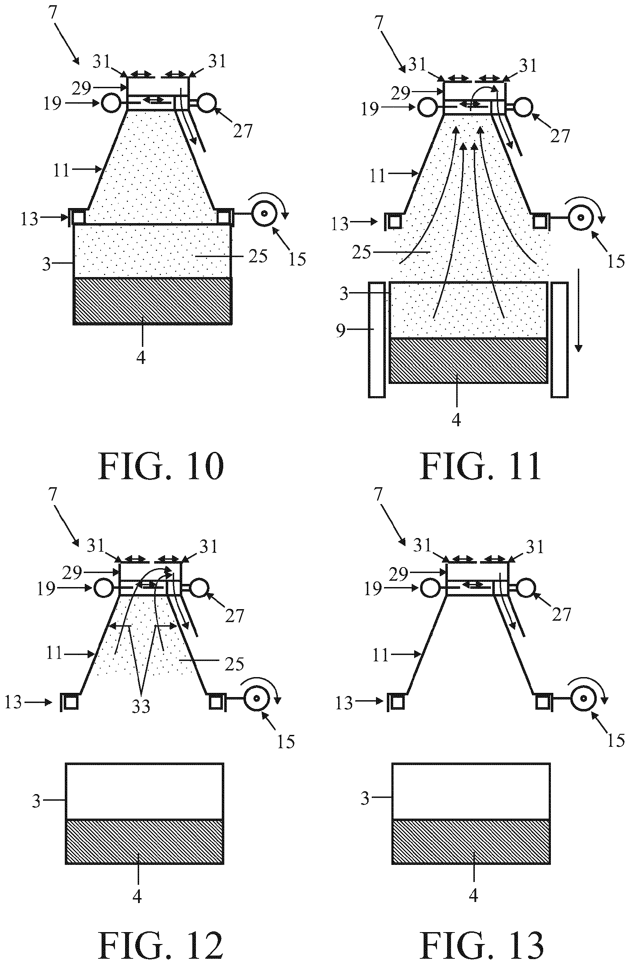

After the dust cloud 25 has been extracted, the shut-off valve 31 is closed, see figure 8, and the funnel 11 with the container 3 coupled thereto is turned back, see figure 9, so that the remaining powdery substance 4 falls back into the container 3, see figure 10. This will again create a cloud of dust 25 in the container 3, which will be extracted.

The container 3 is then uncoupled from the funnel 11 and lowered by the lifting means 9. Any remnant of the dust cloud 25 present is herein extracted by the suction means 27, see figure 11. Then the inside of the funnel 11 is blown clean by blowing nozzles 33 present in the funnel (schematically represented by arrows), whereby the blown powdery dust 25 is suctioned off, see figure 12, and the container 3 is ready to be placed back in the magazine by the transport means, see figure 13.

During suction, the pressure in the hopper is continuously measured and a constant negative pressure in the hopper is maintained in order not to influence the measurement of the weight gain by the suction.

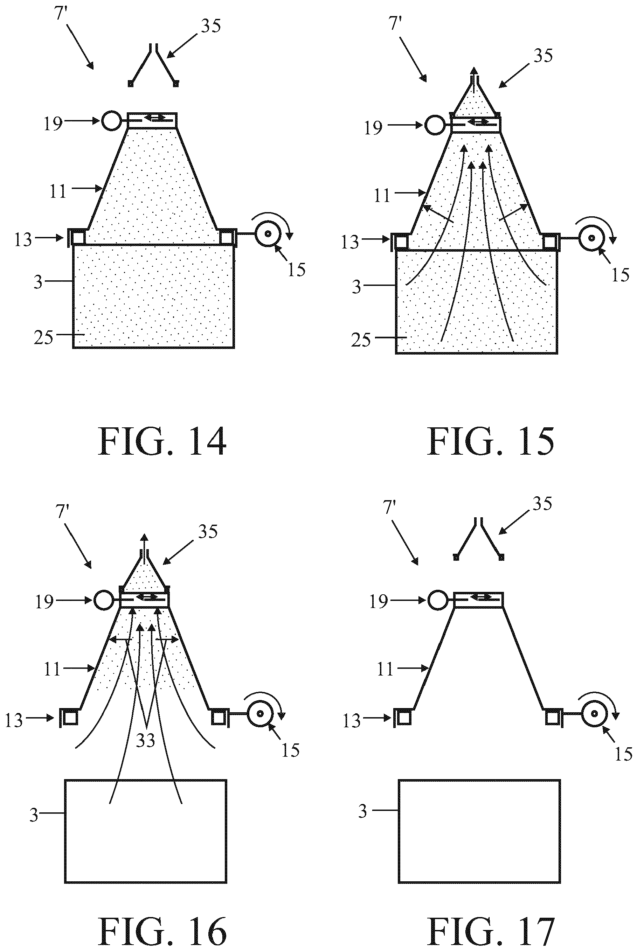

Instead of coupling or integrating the suction device with the dosing slide, the suction device can also be a separate device that is temporarily coupled to the funnel mouth of the funnel. An embodiment of a magazine in which the delivery system 7' has a separate extraction device is schematically shown in figure 14. The extraction device herein has a movable extractor hood 35 which is connected to the metering valve 19 after the funnel 11 has been turned back with the container 3 coupled thereto. This embodiment is particularly suitable for the situation where the container 3 is empty after the powdery substance has been dispensed in order to clean the container 3 and the funnel 11.

After fitting the extractor hood 35 to the metering valve 19 and opening the dosing valve, the container 3 and the funnel 11 are blown clean by blowing nozzles 33 present in the funnel, see figure 15. During blowing and uncoupling the funnel 11 from the container 3, see figure 16, the substance 25 is extracted via the extractor hood 35. After this, the extractor hood 35 is disconnected from the funnel 11 and the delivery system 7' is again ready for use, see figure 17.

Although the present invention is elucidated above on the basis of the given drawings, it should be noted that this invention is not limited whatsoever to the embodiments shown in the drawings. The invention also extends to all embodiments deviating from the embodiments shown in the drawings within the scope of the invention defined by the appended claims.

## Claims

1. A method for dosed dispensing of powdered substance (4) from a magazine (1) in which containers (2, 3) containing different powdered substances are located, comprising:
- removing the container (3) with the desired powdery substance from the magazine (1) by transport means (5),
- taking the desired amount of this powdery substance from this container (3) by a delivery system (7),
- placing a funnel (11) upside down on an opening provided on the top of the container (3) by lifting means (9) and coupling means (13),
- turning the container (3) and the funnel (11) thereon upside down by reversing means (15) so that the contents of the container (3) end up in the funnel (11),
- opening the funnel mouth (17) for dosed dispensing of the powdery substance (4) until the desired amount has fallen from the funnel (11) and then closing the funnel mouth (17) by means of a metering valve (19),
- turning back the container (3) and the funnel (11) underneath by the reversing means (15) so that the remaining powdery substance (4) falls back into the container,
- removing the funnel (11) from the container (3) by the lifting means (9) and the coupling means (13), and
- putting the container (3) back in the magazine (1) by transport means (5), **characterized in that** at removing the funnel (11) from the container (3) by the lifting means (9) and the coupling means (13) releasing dust clouds (25) are extracted by suction means (27) arranged on the funnel mouth (17).

2. A method according to claim 1, **characterized in that** the funnel (11) is blown clean by nozzles (33) and the powdery substance (25) blown away is extracted by the suction means (27) arranged on the funnel mouth (17).

3. Magazine (1) for powdery substances, comprising a number of containers (2, 3) containing different powdery substances, as well as removal means for taking a desired amount of a desired powdery substance from the magazine, wherein the removal means:
- comprise transport means (5) for removing the container (3) with the desired powdery substance from the magazine and placing the container back in the magazine after taking the desired amount of powdery substance from the container, and
- a delivery system (7) for taking the desired amount of the desired powdery substance (4) from the container (3),
which delivery system (7):
- comprises coupling means (13) for coupling an upside-down funnel (11) to an opening provided on the top of the container (3) and, after dispensing the desired amount of powdery substance (4), disconnecting the container (3) and the funnel (11), as well as
- reversing means (15) for turning the container (3) and the funnel (11) thereon upside down so that the contents of the container end up in the funnel, and for dispensing the desired amount of powdery substance (4) from the funnel, turn back the container (3) and the funnel (11) underneath, so that the remaining powdery substance (4) falls back into the container (3), and
- a metering valve (19) for opening and closing the funnel mouth (17), **characterized in that** the magazine further comprises an extraction device for extracting escaping clouds (25) of the powdery substance when the funnel (11) is removed from the container (3) and for extracting powdery substance remaining in the funnel (11) after the funnel (11) has been removed from the container (3), which suction device is connected to the metering valve (19) during operation.

4. Magazine according to claim 3, **characterized in that** the suction device comprises a suction chamber (29) which is provided with an inlet opening connected to the funnel mouth (17) and an outlet opening, and the suction device further comprises a shut-off valve (31) which can close the outlet opening, as well as extraction means (27) which are connected to the extraction chamber (29).

5. Magazine as claimed in claim 4, **characterized in that** the extraction chamber (29) is formed by an open sleeve at both ends, the ends forming the inlet opening and the outlet opening.

6. Magazine according to claim 3, **characterized in that** the extraction device comprises an extraction hood (35) which can be mounted on the funnel mouth (17), as well as extraction means which are connected to the extraction hood (35).

7. Magazine according to claim 3, 4, 5 or 6, **characterized in that** the funnel (11) is provided with nozzles (33) for blowing the funnel (11) clean.

## Patentansprüche

1. Verfahren zum dosierten Ausgeben einer pulverförmigen Substanz (4) aus einem Magazin (1), in dem sich Behälter (2, 3) mit unterschiedlichen pulverförmigen Substanzen befinden, umfassend:
- Entnehmen des Behälters (3) mit der gewünschten pulverförmigen Substanz aus dem Magazin (1) durch Transportmittel (5),
- Entnehmen der gewünschten Menge dieser pulverförmigen Substanz aus diesem Behälter (3) durch ein Abgabesystem (7),
- Aufsetzen eines Trichters (11) auf eine Öffnung an der Oberseite des Behälters (3) durch Hebemittel (9) und Kupplungsmittel (13),
- Umdrehen des Behälters (3) und des darauf befindlichen Trichters (11) durch Umkehrmittel (15), so dass der Inhalt des Behälters (3) in den Trichter (11) gelangt,
- Öffnen der Trichtermündung (17) zum dosierten Ausgeben der pulverförmigen Substanz (4), bis die gewünschte Menge aus dem Trichter (11) gefallen ist, und anschließendes Schließen der Trichtermündung (17) mittels eines Dosierventils (19),
- Zurückdrehen des Behälters (3) und den darunter befindlichen Trichter (11) durch die Umkehreinrichtung (15), so dass die verbleibende pulverförmige Substanz (4) in den Behälter zurückfällt,
- Entfernen des Trichters (11) aus dem Behälter (3) durch die Hebemittel (9) und die Kupplungsmittel (13), und
- Zurücksetzen des Behälters (3) in das Magazin (1) durch die Transporteinrichtung (5),
**dadurch gekennzeichnet, dass** beim Entfernen des Trichters (11) aus dem Behälter (3) durch die Hebemittel (9) und die Kupplungsmittel (13) freigesetzte Staubwolken (25) durch an der Trichtermündung (17) angeordnete Saugmittel (27) abgesaugt werden.

2. Verfahren nach Anspruch 1, **dadurch gekennzeichnet, dass** der Trichter (11) durch Düsen (33) saubergeblasen und die weggeblasene pulverförmige Substanz (25) durch an der Trichtermündung (17) angeordnete Saugmittel (27) abgesaugt wird.

3. Magazin (1) für pulverförmige Substanzen, umfassend eine Anzahl von Behältern (2, 3), die unterschiedliche pulverförmige Substanzen enthalten, sowie Entnahmemittel zum Entnehmen einer gewünschten Menge einer gewünschten pulverförmigen Substanz aus dem Magazin, wobei die Entnahmemittel:
- Transportmittel (5) zum Entnehmen des Behälters (3) mit der gewünschten pulverförmigen Substanz aus dem Magazin und zum Zurückstellen des Behälters in das Magazin nach Entnahme der gewünschten Menge der pulverförmigen Substanz aus dem Behälter umfassen, und
- ein Abgabesystem (7) zum Entnehmen der gewünschten Menge der gewünschten pulverförmigen Substanz (4) aus dem Behälter (3),
welches Abgabesystem (7):
- Kupplungsmittel (13) zum Ankuppeln eines umgedrehten Trichters (11) an eine Öffnung an der Oberseite des Behälters (3) und zum Trennen des Behälters (3) und des Trichters (11) nach Abgabe der gewünschten Menge der pulverförmigen Substanz (4) umfasst, sowie
- Umkehrmittel (15) zum Umdrehen des Behälters (3) und des darauf befindlichen Trichters (11), so dass der Inhalt des Behälters in den Trichter gelangt, und zum Abgeben der gewünschten Menge pulverförmiger Substanz (4) aus dem Trichter, den Behälter (3) und den darunterliegenden Trichter (11) zurückdrehen, so dass die verbleibende pulverförmige Substanz (4) in den Behälter (3) zurückfällt, und
- ein Dosierventil (19) zum Öffnen und Schließen der Trichtermündung (17),
**dadurch gekennzeichnet, dass** das Magazin ferner eine Absaugvorrichtung zum Absaugen entweichender Wolken (25) der pulverförmigen Substanz beim Entfernen des Trichters (11) aus dem Behälter (3) und zum Absaugen von im Trichter (11) verbleibender pulverförmiger Substanz nach dem Entfernen des Trichters (11) aus dem Behälter (3) umfasst, welche Absaugvorrichtung während des Betriebs mit dem Dosierventil (19) verbunden ist.

4. Magazin nach Anspruch 3, **dadurch gekennzeichnet, dass** die Absaugvorrichtung eine Absaugkammer (29) umfasst, die mit einer mit der Trichtermündung (17) verbundenen Einlassöffnung und einer Auslassöffnung versehen ist, und die Absaugvorrichtung ferner ein Absperrventil (31) umfasst, das die Auslassöffnung verschließen kann, sowie Absaugmittel (27), die mit der Absaugkammer (29) verbunden sind.

5. Magazin nach Anspruch 4, **dadurch gekennzeichnet, dass** die Absaugkammer (29) durch eine an beiden Enden offene Hülse gebildet ist, wobei die Enden die Einlassöffnung und die Auslassöffnung bilden.

6. Magazin nach Anspruch 3, **dadurch gekennzeichnet, dass** die Absaugvorrichtung eine Absaughaube (35) umfasst, die auf die Trichtermündung (17) montiert werden kann, sowie Absaugmittel, die mit der Absaughaube (35) verbunden sind.

7. Magazin nach Anspruch 3, 4, 5 oder 6, **dadurch gekennzeichnet, dass** der Trichter (11) mit Düsen (33) zum Freiblasen des Trichters (11) versehen ist.

## Revendications

1. Procédé de distribution dosée de substance pulvérulente (4) à partir d'un magasin (1) dans lequel se trouvent récipients (2, 3) contenant différentes substances pulvérulentes, comprenant :
- retirer le récipient (3) contenant la substance pulvérulente souhaitée du magasin (1) à l'aide d'un moyen de transport (5),
- prélever la quantité souhaitée de cette substance pulvérulente dans ce récipient (3) par un système de délivrance (7),
- placer un entonnoir (11) à l'envers sur une ouverture prévue sur le dessus du conteneur (3) par moyens de levage (9) et moyens d'accouplement (13),
- retourner le récipient (3) et l'entonnoir (11) dessus par moyens de retournement (15) pour que le contenu du récipient (3) finisse dans l'entonnoir (11),
- ouvrir l'embouchure de l'entonnoir (17) pour une distribution dosée de la substance pulvérulente (4) jusqu'à ce que la quantité souhaitée soit tombée de l'entonnoir (11), puis fermer l'embouchure de l'entonnoir (17) au moyen d'une vanne doseuse (19),
- retourner le récipient (3) et l'entonnoir (11) en dessous par les moyens de retournement (15) pour que la substance pulvérulente (4) restante retombe dans le récipient,
- retirer l'entonnoir (11) du récipient (3) par les moyens de levage (9) et les moyens d'accouplement (13), et
- remettre le récipient (3) dans le magasin (1) par des moyens de transport (5),
**caractérisé en ce qu'**au retrait de l'entonnoir (11) du récipient (3) par les moyens de levage (9) et les moyens d'accouplement (13) libérant des nuages de poussières (25) sont extraits par des moyens d'aspiration (27) disposés sur l'embouchure de l'entonnoir (17).

2. Procédé selon la revendication 1, **caractérisé en ce que** l'entonnoir (11) est soufflé proprement par des buses (33) et la substance pulvérulente (25) soufflée est extraite par les moyens d'aspiration (27) disposés sur l'embouchure de l'entonnoir (17).

3. Magasin (1) pour substances pulvérulentes, comprenant un certain nombre de récipients (2, 3) contenant différentes substances pulvérulentes, ainsi que des moyens de prélèvement pour prélever une quantité souhaitée d'une substance pulvérulente souhaitée dans le magasin, dans lequel les moyens de prélèvement:
- comprennent des moyens de transport (5) pour retirer du magasin le récipient (3) contenant la substance pulvérulente souhaitée et remettre le récipient dans le magasin après avoir prélevé la quantité souhaitée de substance pulvérulente du récipient, et
- un système de distribution (7) pour prélever la quantité souhaitée de la substance pulvérulente souhaitée (4) du récipient (3),
quel système de distribution (7) :
- comprend des moyens d'accouplement (13) pour coupler un entonnoir renversé (11) à une ouverture prévue sur le dessus du récipient (3) et, après avoir distribué la quantité souhaitée de substance pulvérulente (4), déconnecter le récipient (3) et l'entonnoir (11), ainsi que
- des moyens retournement (15) pour retourner le récipient (3) et l'entonnoir (11) dessus de manière à ce que le contenu du récipient finisse dans l'entonnoir, et pour distribuer la quantité souhaitée de substance pulvérulente (4) à partir de l'entonnoir, retournez le récipient (3) et l'entonnoir (11) en dessous, de manière à ce que la substance pulvérulente restante (4) retombe dans le récipient (3), et
- une vanne doseuse (19) pour ouvrir et fermer l'embouchure de l'entonnoir (17), **caractérisé en ce que** le magasin comprend en outre un dispositif d'extraction pour extraire les nuages qui s'échappent (25) de la substance pulvérulente lorsque l'entonnoir (11) est retiré du récipient (3) et pour extraire la substance pulvérulente restant dans l'entonnoir (11) après que l'entonnoir (11) a été retiré du récipient (3), lequel dispositif d'aspiration est relié pendant le fonctionnement à la vanne doseuse (19).

4. Magasin selon la revendication 3, **caractérisé en ce que** le dispositif d'aspiration comprend une chambre d'aspiration (29) qui est munie d'une ouverture d'entrée reliée à l'embouchure de l'entonnoir (17) et d'une ouverture de sortie, et le dispositif d'aspiration comprend en outre une vanne d'arrêt (31) qui peut fermer l'ouverture de sortie, ainsi que des moyens d'aspiration (27) qui sont reliés à la chambre d'aspiration (29).

5. Magasin selon la revendication 4, **caractérisé en ce que** la chambre d'aspiration (29) est formée par un manchon ouvert aux deux extrémités, les extrémités formant l'ouverture d'entrée et l'ouverture de sortie.

6. Magasin selon la revendication 3, **caractérisé en ce que** le dispositif d'extraction comprend un capot d'aspiration (35) pouvant être monté sur l'embouchure de l'entonnoir (17), ainsi que des moyens d'aspiration qui sont reliés au capot d'aspiration (35).

7. Magasin selon la revendication 3, 4, 5 ou 6, **caractérisé en ce que** l'entonnoir (11) est muni de buses (33) pour nettoyer l'entonnoir (11).
